# EUROPÄISCHE PATENTSCHRIFT

(11) **EP 1 360 092 B1**
(45) Veröffentlichungstag und Bekanntmachung des Hinweises auf die Patenterteilung: **18.08.2004**
(21) Anmeldenummer: 02706647.1
(22) Anmeldetag: 29.01.2002
(51) Int. Cl.: B60R 21/01, B60J 5/04

(54) **GERÄT ZUM ANBRINGEN AN EINE FAHRZEUGTÜRE**
DEVICE WHICH CAN BE APPLIED TO THE DOOR OF A MOTOR VEHICLE
DISPOSITIF DESTINE A ETRE MONTE AU NIVEAU D'UNE PORTIERE DE VEHICULE

(30) Priorität: 12.02.2001 DE 10106311
(43) Veröffentlichungstag der Anmeldung: 12.11.2003
(73) Patentinhaber: SIEMENS AKTIENGESELLSCHAFT, 80333 München (DE)
(72) Erfinder: FRANZEN, Frank, 93077 Bad Abbach (DE); BRAUNER, Norbert, 94377 Steinach (DE)
(86) Internationale Anmeldenummer: PCT/DE2002/000314
(87) Internationale Veröffentlichungsnummer: WO 2002/064403

(56) Entgegenhaltungen:
- DE-A- 19 537 504
- DE-A- 19 701 376
- DE-A- 19 911 483
- DE-A- 19 923 985
- DE-C- 19 544 974
- PATENT ABSTRACTS OF JAPAN vol. 1997, no. 03, 31. März 1997 (1997-03-31) & JP 08 303083 A (OMRON CORP), 19. November 1996 (1996-11-19)

## Beschreibung

Die Erfindung betrifft ein Gerät zum Anbringen an eine Fahrzeugtüre.

In heutigen Kraftfahrzeugen sind diverse elektronische Steuerungen vorgesehen, z. B. Steuerungen für den Antriebsstrang in Form von Motor-/ Getriebesteuerungen, Steuerungen für Sicherheitskomponenten im Fahrzeug in Form von Airbag- oder ABS-Steuerungen, Steuerungen von der Karosserie zugeordneter Funktionen, wie Bordnetze oder Zündelektronik, sowie Steuerungen von dem Komfort zugeordneter Funktionen wie Navigationssysteme, Multifunktionsdisplays etc..

Dabei ist typischerweise je zu steuernder Funktion ein gehäustes Gerät vorgesehen enthaltend die Steuerung mit allen zugehörigen Komponenten inklusive Elektronik, Sensorik, Steckverbinder zur Anbindung, etc.. Solche Geräte werden im allgemeinen nach der zu steuernden Funktion benannt: z.B. ABS-Steuergerät, Airbag-Steuergerät, Motor-Steuergerät, etc.. Typischerweise sind solche elektronischen Steuergeräte nahe am Ort der zu steuernden Funktion verbaut. Ist die Aufnahme von Messgrößen erforderlich, die nicht am Einbauort des Steuergerätes erfasst werden können, so werden die zugehörigen Sensoren an anderen Einbaustellen im Kraftfahrzeug angeordnet und über Leitungen mit dem zugehörigen Steuergerät verbunden.

Hinsichtlich der Steuerung von Insassenschutzkomponenten wie Airbags, Gurtstraffer, etc. hat sich die Anordnung eines zentral im Fahrzeug am Fahrzeugtunnel angeordneten Airbag-Steuergerätes etabliert. Ein solches Steuergerät enthält gewöhnlich einen Beschleunigungssensor zur Aufnahme von Fahrzeuglängsbeschleunigungen, einen Microcontroller zur algorithmischen Verarbeitung der aufgenommenen Beschleunigungssignale, sowie eine Zündkreisschaltung mit Leistungsschaltern, die einen Hochstromimpuls durchschalten können. Ein am Airbag angeordneter und über Zweidrahtleitungen an das Steuergerät angeschlossener Zünder wird in Folge eines solchen Hochstrompulses aktiviert und bewirkt in einer Kettenreaktion das Ausströmen von gespeichertem Gas in den bis dato zusammengefalteten Airbag.

Sind im Fahrzeug Insassenschutzmittel für einen Seitenaufprall vorgesehen, so sind die einen Seitenaufprall erkennenden Sensoren gewöhnlich an der Fahrzeugseite angeordnet. Eine Anordnung dieser Sensoren in dem zentralen Steuergerät verbietet sich in der Regel, da das Aufprallsignal von dem Ort seiner Einleitung an der Fahrzeugseite hinweg über Karosseriestrukturen in das Fahrzeugzentrum eine für das Auslösen des Seitenaufprallschutzmittels zu lange Laufzeit benötigt, als dann ein Auslösen des Schutzmittels aufgrund der schwach dimensionierten Knautschzone an der Fahrzeugseite für einen wirksamen Schutz zu spät erfolgen würde. Deshalb sind Seitenaufprallsensoren gewöhnlich möglichst nahe am potentiellen Aufprallort angeordnet und über Leitungen mit dem zentralen Steuergerät verbunden.

Ein Seitenaufprall wird vorzugsweise mit Hilfe von laterale Beschleunigungen aufnehmenden Beschleunigungssensoren erkannt, welche insbesondere an der B-Säule oder an den Seitenschwellern des Fahrzeugs angebracht sind.

Als Alternative hat die Anmelderin in der EP 0 667 822 B1 den Einsatz von Drucksensoren zur Seitenaufprallerkennung vorgeschlagen. Ein in einem Hohlraum in einer Fahrzeugtür angeordneter Luftdrucksensor erkennt dabei durch einen Seitenaufprall hervorgerufene Volumenänderungen des Hohlraumes anhand einer Änderung des Luftdrucks im Hohlraum. Die Verwendung von Drucksensoren zur Seitenaufprallerkennung ist äußerst schnell und zuverlässig.

Fahrzeugtüren sind gewöhnlich entlang ihrer Länge durch eine vertikal aufragende Trennwand zweigeteilt: Der der Fahrzeugaußenhaut zugewandte Nassraum nimmt die herabgefahrene Fensterscheibe auf, wohingegen in dem der Fahrzeuginnenverkleidung zugewandten Trockenraum mechanische und elektrische Geräte angeordnet sind, die der rauen Umgebung des Nassraumes wegen Feuchtigkeit, Haltbarkeit, Schutz vor mechanischen Einwirkungen etc. nicht ausgesetzt sein dürfen.

Die DE 199 23 985 A1 zeigt eine solche Sensorbaugruppe mit einem Drucksensor zur Aufnahme von Druckänderungen im Nassraum, die ihrerseits im Trockenraum einer Fahrzeugtüre angeordnet ist. Dabei ist durch den Einsatz geeigneter mechanischer Mittel ein Druckkanal vom Nassraum durch die Trennwand hindurch zu dem Drucksensor der Sensorbaugruppe vorgesehen.

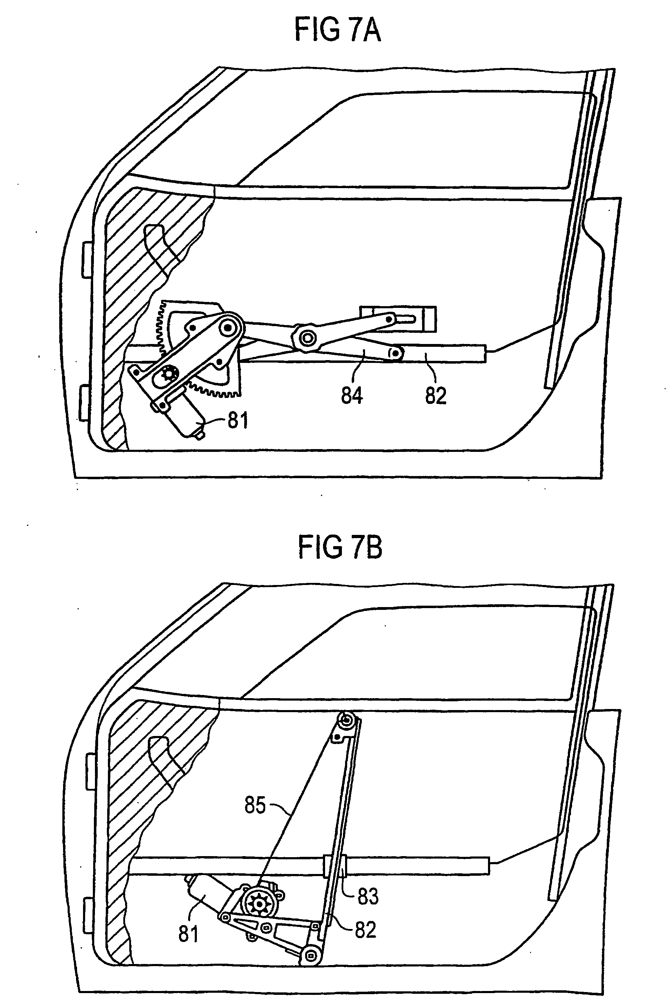

Ferner ist häufig ein elektromotorisch betriebener Fensterheberantrieb in eine Kraftfahrzeugtür verbaut. Die Figuren 7a und 7b zeigen dabei zwei herkömmliche Fensterheberantriebe nach dem "Kraftfahrtechnischen Taschenbuch", September 1995, Seiten 758 und 759, Springer-Verlag, in einer aufgeschnittenen Fahrzeugtüre in Seitenansicht: Dabei kennzeichnen die Bezugszeichen 81 stets einen Elektrogetriebemotor und 82 eine Führungsschiene. In Figur 7a betätigt dabei der Elektrogetriebemotor 81 ein in der Führungsschiene 82 gelagertes Gelenkgetriebe 84, das mit zumindest einem Schenkel mit dem Fenster verbunden ist und über den vorgestellten Wirkmechanismus ein Anheben oder Absenken der Fensterscheibe verursachen kann. In Figur 7b ist ein Fensterheberantrieb gezeigt, bei dem abermals ein Elektrogetriebemotor 1 diesmal ein Antriebsseil 85 betätigt, welches über eine Umlenkrolle in der Führungsschiene 82 geführt wird. Das Antriebsseil 85 ist über einen Mitnehmer 83 mit der Fensterscheibe verbunden, so dass über diesen Wirkmechanismus ebenfalls die Fensterscheibe angehoben oder abgesenkt werden kann.

Der Einbau einer Aufprallsensorbaugruppe einerseits und eines Fensterheberantriebs andererseits in die Fahrzeugtüre ist aufwendig und bedarf vieler Montageschritte. Zudem ist ein beachtlicher Bauraum zum Einbau dieser beiden Baugruppen bereitzustellen. Der Bauraum in Fahrzeugtüren ist andererseits durch eine vorgegebene Breite der Fahrzeugtüre wie auch einen stets vorzusehenden Nassraum für eine gesenkte Fensterscheibe stark begrenzt.

Ein Gerät mit den Merkmalen der Oberbegriffs des Anspruchs 1 ist aus der DE-A-195 37 504 bekannt.

Aufgabe der Erfindung ist es, ein kompaktes Gerät zum Einbau in eine Fahrzeugtüre anzugeben, das neben kleiner baulicher Abmessungen auch einfach montiert werden kann und einen geringen Materialverbrauch aufweist.

Diese Aufgabe wird erfindungsgemäß durch die Merkmale des Anspruchs 1 gelöst.

Dabei werden Bestandteile eines Antriebs zum Heben oder Senken eines Fahrzeugfensters wie Bestandteile einer Sensoreinheit zum Erkennen eines Aufpralls gemeinsam in einem Gehäuse des an einer Fahrzeugtüre anzubringenden Gerätes gemeinsam angeordnet. Erstmalig werden dabei mechanische, einer Komfortfunktion zugeordnete Bauteile gemeinsam mit elektronischen, einer Sicherheitsfunktion zugeordneten Bauteilen gemeinsam zu einem neuartigen Türmodul zusammengefasst. Dieses Gerät wird dabei an der Fahrzeugtüre angebracht, vorzugsweise im Inneren der Fahrzeugtüre zwischen Türaußenhaut und Türinnenverkleidung.

Der in Anspruch genommene Bauraum ist deutlich verringert gegenüber dem herkömmlichen separaten Einbau der Komponenten. Somit wird ein hoher mechanischer und elektrischer Integrationsgrad erreicht. Der Montageaufwand ist beträchtlich gesenkt, da lediglich ein einziges Gehäuse zu montieren ist. Die bislang aufwendige Montage des Fensterheberantriebs im Türrahmen entfällt. Statt dessen wird ein beträchtlicher Teil des Fensterheberantriebs im Gehäuse des erfindungsgemäßen Gerätes vormontiert, welches seinerseits auf einfache Weise, z. B. mittels einer Schraubbefestigung an der Fahrzeugtür oder an Bestandteilen der Fahrzeugtür angebracht werden kann.

Die von Anspruch 1 abhängigen Ansprüche 2 bis 6 sind auf erfindungsgemäße Geräte ausgerichtet, die über die beschriebenen Funktionen hinaus noch weitere Steuerfunktionen beinhalten, insbesondere Steuerungen von in der Fahrzeugtür angeordneten Komponenten wie Türschlösser, Außenspiegel, etc. Für diese Steuerfunktionen wurde herkömmlich ein weiteres eigenständiges, gehäustes Gerät vorgesehen, das neben den vorstehend beschriebenen separaten Geräten "Fensterheberantrieb" und "Aufprallsensorbaugruppe" in der Fahrzeugtür anzuordnen war. Mit der Aufnahme von diese Funktionen realisierenden Schaltungsbestandteilen in das erfindungsgemäße Gerät wird eine weitere mechanische und elektrische Integration von in der Fahrzeugtüre angeordneten Steuerkomponenten erreicht. Der beanspruchte Bauraum wird weiter verkleinert und die Montage dadurch erleichtert. Dabei handelt es sich vorzugsweise um Schaltungsbestandteile/Elektronik zum Steuern des Fensterheberantriebs, zum Auswerten manueller Eingabesignale durch den Insassen zur Steuerung des Fensterheberantriebs, insbesondere auch bei einem autarken Fensterheberbetrieb für die Beifahrertür. Des weiteren je nach Ausstattungsgrad um Funktionen zur Steuerung des Türschlosses, Zentralverriegelungsfunktionen eingeschlossen, um eine Steuerung von verstellbaren Außenspiegel auf Fahrer- und/oder Beifahrerseite, um eine Steuerung zur Beheizung des Außenspiegels und ggf auch zur Beheizung des Außenspiegels der gegenüberliegenden Fahrzeugseite, um eine Steuerung für eine Innenraumbeleuchtung, sowie um eine Überschusskraftbegrenzung für Fensterheber zum Verhindern des Einklemmens von Körperteilen. Für diese Funktionen erforderliche Sensoren oder Aktoren werden über Kabelsätze und Stecker an das erfindungsgemäße Gerät angeschlossen.

Hinsichtlich der in das Gerät integrierten Aufprallsensoreinheit ist neben dem Aufprallsensor vorzugsweise eine Auswerteschaltung für Sensorsignale vorgesehen, die die Sensorsignale oder daraus abgeleitete Signale zumindest diskretisiert oder aber auch hinsichtlich der Aufprallschwere bewertet.

Bei der Integration der weiteren Steuerfunktionen werden nicht nur weitere Gehäuse, sondern auch weitere Schaltungsträger, Befestigungsschrauben, Steckkontakte etc. eingespart. Darüber hinaus ist der für das erfindungsgemäße Gerät vorzusehende Kabelbaum in seiner Leitungsführung erheblich vereinfacht ausgestaltet: Das erfindungsgemäße Gerät enthält nur noch einen Stecker zur Anbindung eines Kabelbaums. Über diese Steckverbindung wird das erfindungsgemäße Gerät mit außerhalb der Fahrzeugtüre angeordneten Steuerungen, Sensoren oder Aktoren verbunden, sowie mit einer Stromversorgung. Zur Anbindung von innerhalb der Fahrzeugtüre angeordneten Sensoren oder Aktoren ist ein Mehrfahrstecker am Gerät vorgesehen.

Durch die Anordnung von Schaltungsbestandteilen vorgenannter' Funktionen auf einem oder zwei gemeinsamen Schaltungsträgern werden gegenüber herkömmlichen separaten Steuergeräten nicht nur Schaltungsträger sondern auch diesbezüglich Montageaufwand eingespart. Auch die Anschlüsse/Schnittstellen zur Anbindung von Sensoren/Aktoren/anderen Steuergeräten werden reduziert. In einer besonders vorteilhaften Weiterbildung ist auch nur eine Recheneinheit in Form eines Microcontrollers in dem erfindungsgemäßen Gerät zur Umsetzung aller Funktionen vorgesehen. Auch die Schaltungsbestandteile Spannungsversorgung, Taktgeber oder Ausgangstreiber sind nur noch in einfacher Ausfertigung im Gerät als gemeinsame Ressource für alle Funktionen vorgesehen.

Erfindungsgemäß ist eine Getrieberadwelle des Fensterheberantriebs durch dieselbe Gehäusewand nach außen geführt, wie ein Dichtkissen. Das Dichtkissen hat die Funktion, zum einen das Gehäuseinnere gegen den Drucksensor abzudichten, und zum anderen das Gehäuse gegen die Trennwand abzudichten. Beide Bestandteile - Getrieberadwelle und Dichtkissen - sind dicht durch die Gehäusewand geführt und ferner in der Trennwand der Fahrzeugtüre gelagert oder durchbohren sie. Hier zeigt sich in besonderer Weise die vorteilhafte Gestaltung des Gerätes: Das Gerät enthält zwei Funktionen - nämlich die Druckerkennung und den Fensterheberantrieb - die beide eine Anbindung an den Nassraum der Fahrzeugtüre erfordern: Die Aufprallerkennung insofern, als der nahe an der Fahrzeugaußenhaut befindliche Nassraum oder zumindest Bestandteile davon das Messvolumen für Druckschwankungen darstellen, der Fensterheberantrieb wegen der Anordnung der Fensterscheibe im Nassraum. Deshalb ist das erfindungsgemäße Gerät nur auf einer seiner Gehäuseseiten mit Öffnungen zu versehen, die eine Durchführung der Getrieberadwelle wie auch eine Durchführung eines Dichtkissens für den Druckkanal gestatten. Darüber hinaus können sowohl Dichtkissen wie auch Getrieberadwelle in der Trennwand der Fahrzeugtüre gelagert sein, so dass durch diese zwei Auflagepunkte in der Trennwand eine zusätzliche mechanische Abstützung des erfindungsgemäßen Gerätes erfolgt. In besonders vorteilhafter Weise enthält das Gerät dabei nur eine Öffnung, die sowohl als Druckkanal als auch als Durchführung für die Getrieberadwelle dient. Hierbei wird in Bauraum erheblich eingespart.

Die Ansprüche 7 bis 9 zeigen ein Gerät mit vorteilhaften Anordnungen von einem oder mehreren Schaltungsträgern im Gerät, wobei die Anordnungen darauf ausgerichtet sind, den Bauraum und insbesondere die Bauhöhe des Gerätes zu minimieren.

Anspruch 10 ordnet in vorteilhafter Weise einen Drehzahlmesser für einen Bestandteil des Fensterheberantriebs auf dem Schaltungsträger an, auf dem üblicherweise auch Drucksensor und Auswerteschaltung angeordnet sind.

Anspruch 11 kennzeichnet eine besonders vorteilhafte Weiterbildung der Erfindung, bei der das Gehäuse nur eine, nach einer Seite offene Schale enthält. Eine Gehäusewand wird demzufolge durch die Trennwand gebildet. Damit wird in besonders vorteilhafter Weise Material und Bauhöhe eingespart. Das Dichtkissen ist dann vorzugsweise einteilig ausgebildet und ist direkt zwischen Schaltungsträger und Trennwand verspannt.

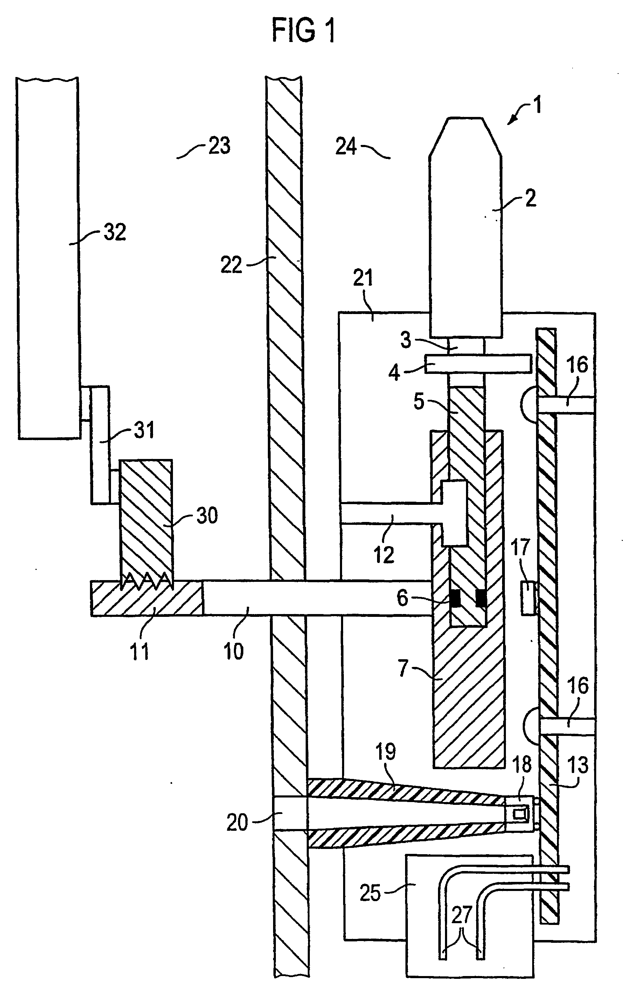

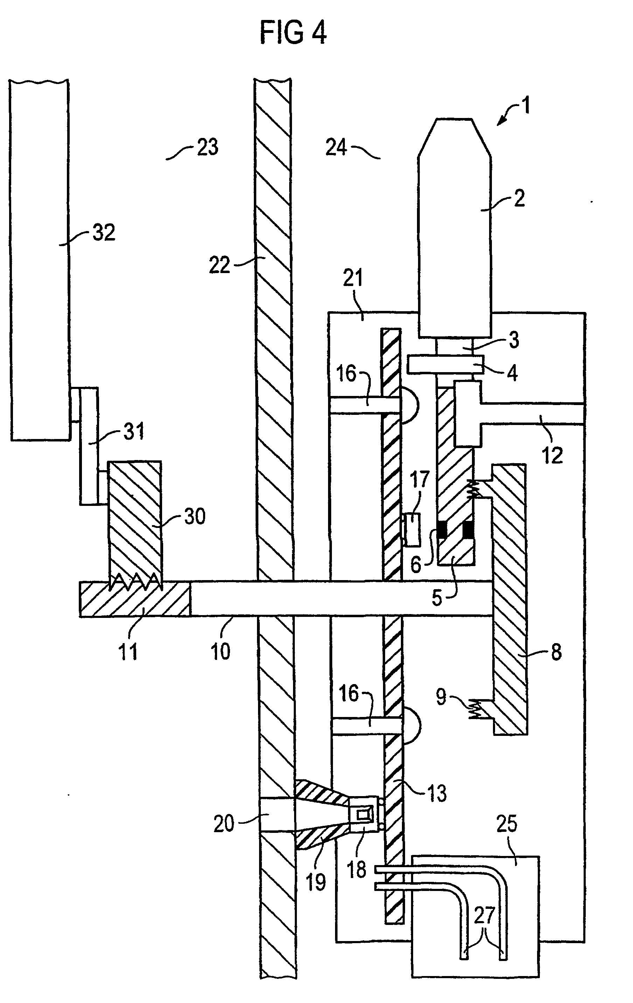

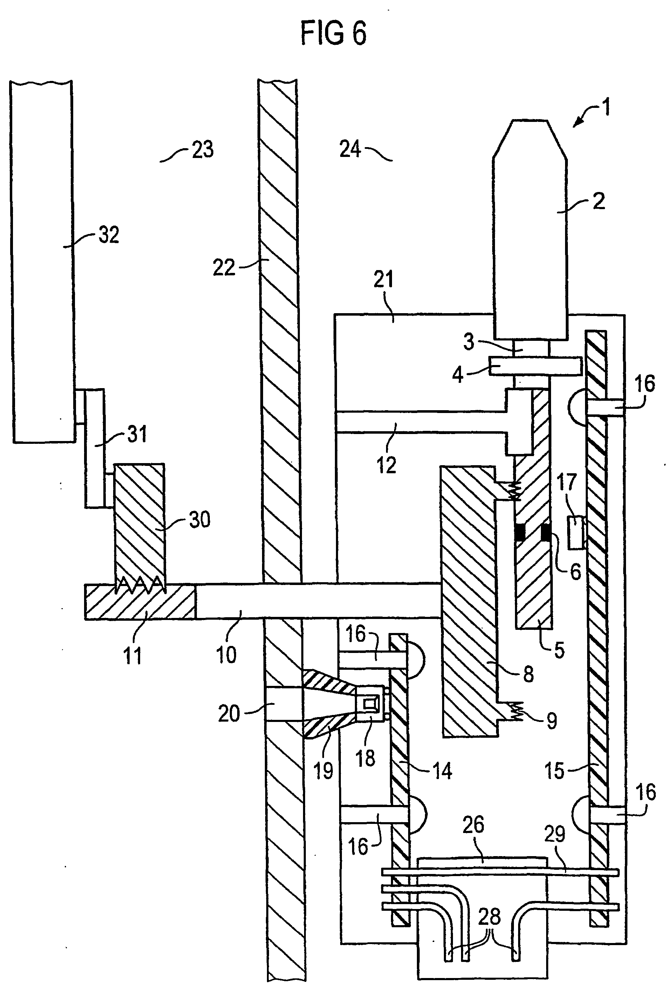

Die Erfindung und ihre Weiterbildungen werden anhand von in den Figuren dargelegten Ausführungsbeispielen der Erfindung näher beschrieben. Die Figuren 1 bis 6 zeigen Ausführungsbeispiele des erfindungsgemäßen Gerätes. Die Figuren 7a und 7b zeigen herkömmliche Fensterheberantriebe nach dem Stand der Technik.

Gleiche Elemente sind in den Figuren durchgängig mit den gleichen Bezugszeichen gekennzeichnet.

Jede der Figuren 1 bis 6 zeigt einen Schnitt durch eine Fahrzeugtür in Längsrichtung, wobei die Außenhaut wie auch die Innenverkleidung der Fahrzeugtür nicht eingezeichnet sind.
Sie lägen entlang des rechtseitigen bzw. linksseitigen Blattrandes. Im Querschnitt ist eine Trennwand 22 ersichtlich, die die Fahrzeugtüre in Längsrichtung durchzieht. Sie teilt den Innenraum der Fahrzeugtüre in einen Nassraum 23, der üblicherweise nicht dicht gegenüber der Außenwelt ausgebildet ist, und einen Trockenraum 24, der gegen den Nassraum 23 abgedichtet ist, und der gewöhnlich witterungsempfindliche mechanische und elektronische Komponenten aufnimmt.

Im Trockenraum 24 ist ein erfindungsgemäßes Gerät im Querschnitt gezeigt, das ein Gehäuse 21 aufweist. In dem Gehäuse 21 sind Bestandteile eines Antriebes 1 bis 12 zum Heben oder Senken eines Fahrzeugfensters 32 angeordnet. Diese Bestandteile 1 bis 12 bilden im wesentlichen einen Elektromotor 1 mit einem nachgeschalteten Getriebe. Der Elektromotor 1 enthält einen Rotor 2, einen Kommutator 4 und eine Welle 3. Das Getriebe nach Figur 1 ist als Schneckengetriebe ausgebildet und enthält ein Schneckenrad 7 an einer Getrieberadwelle 10. Die Getrieberadwelle 10 ist um ihre Längsachse drehbar im Gehäuse 21 gelagert. Der Elektromotor 1 ist an seinem Rotorblock 2 im Gehäuse 21 fixiert. Die Welle 3 des Elektromotors 3 ist separat in einem mit dem Gehäuse 21 verbundenen Lager 12 im Gehäuse 21 gelagert. Die Welle 3 des Elektromotors enthält an ihrem Ende ein Gewinde 5. Das Gewinde 5 treibt bei Drehung der Welle 4 um ihre Längsachse das Schneckenrad 7 des Getriebes an. Durch die Rotation des Schneckenrades 7 wird die Schneckenradwelle 10 angetrieben (= Zylinderschnecken-Getriebe). Die Wellenachsen der Elektromotorwelle 3 und der Getrieberadwelle 10 kreuzen sich dabei rechtwinklig. Die Getrieberadwelle 10 ist in dichter Weise nicht nur durch das Gehäuse 21 des Gerätes geführt, sondern auch durch die Trennwand 22. Im Nassraum 23 treibt die Schneckenradwelle 10 über ein endseitig aufgetragenes Gewinde über einen Gelenkarmhub 30 ein Gelenkgetriebe 31. Diese Komponenten sind bereits aus Figur 7a bekannt. Mit dem Gelenkgetriebe 31 ist eine Fensterscheibe 32 gekoppelt.

An der Trennwand 24 abgewandten Seite des Gehäuses 21 ist im Gehäuseinneren ein als FR4-PCB-Leiterplatte ausgebildeter Schaltungsträger 13 über Schrauben 16 am Gehäuse 21 angebracht. Es kann auch ein anderer Schaltungsträgertyp verwendet werden. In vorteilhafter Weise ist der Kommutator 4 des Elektromotors 1 derart ausgebildet, dass die in der Figur nicht dargestellten Bürsten des Elektromotors 1 auf dem Schaltungsträger angeordnet werden können. Da die Bürsten von Gleichstrommotoren sehr störanfällig sind, kann alternativ auch ein Drehstrom-Asynchron Motor (Induktionsmotor) zum Einsatz kommen. Bei diesem Elektromotortyp entfallen die Bürsten. Ebenfalls nicht dargestellt ist die elektrische Anbindung des Elektromotors 1 an den Schaltungsträger 13. Der Schaltungsträger kann auch als flexible Leiterplatte ausgebildet sein. Der Schaltungsträger kann auch beidseitig bestückt sein.

Auf der dem Schneckenrad 7 zugewandten Seite des Schaltungsträgers 13 ist ein sogenannter GMR-Sensor 17 (Giant Magnetic Resistor) angeordnet. Dieser dient zur Messung der Drehzahl der Welle 4 des Elektromotors 1 und damit zur mittelbaren Feststellung der Position des Schneckenrades 7. Mit Hilfe des Sensors 17 kann damit mittelbar auch die Lage des Gelenkgetriebes 31 und die Position der Fensterscheibe 32 softwaregesteuert ermittelt werden. Am Ende der Welle 4 des Elektromotors 1 ist ein Permanentmagnet 6 so angeordnet, dass sein magnetisches Feld in Folge der Drehung der Welle 4 alternierend den GMR-Sensor 17 durchsetzt. Dadurch werden Pulse erzeugt, die von einer Elektronik zur Drehzahlerfassung ausgewertet werden können. Über die Erfassung der Drehzahl der Welle 4 kann eine Verzögerung der Drehbewegung erkannt werden, wie sie etwa beim Einklemmen von Körperteilen oder Gegenständen zwischen Oberkante der Fensterscheibe 23 und oberen Metallrahmen der Fahrzeugtür auftreten kann. Durch Auswertung der Verzögerung der ermittelten Drehbewegung kann der Elektromotor 1 schaltungstechnisch angehalten werden und dadurch ein Einklemmen von Körperteilen oder Gegenständen durch die Fensterscheibe 32 verhindert werden. Alternativ zur Erfassung der Drehzahl der Welle 4 können auch zwei auf dem Schaltungsträger 13 angebrachte Hall-Sensoren oder Feldplattensensoren verwendet werden.

Ferner sind auf dem Schaltungsträger 13 Bestandteile einer Sensoreinheit zum Erkennen eines Aufpralls angeordnet. Hier ist zunächst auf der dem Schneckenrad 7 zugewandten Seite des Schaltungsträgers 13 ein Drucksensor 18 angeordnet. Dieser dient zur Ermittlung von Druckänderungen im Nassraum 23 bei einem Aufprall nach oben erläutertem Prinzip. Der Druckanstieg wird von dem Drucksensor 18 erfasst und über auf dem Schaltungsträger 13 angebrachte Schaltungsbestandteile wie etwa Microcontroller und/oder geeignete andere Schaltungen ausgewertet. Der als Messvolumen verwendete Nassraumbereich 23 muss in geeigneter Weise mit dem Drucksensor 18 verbunden sein. Andererseits muss die Trennwand 22 den Nassraum 23 gegen den Trockenraum 24 abdichten. Aufgrund dessen muss die Verbindung zwischen dem Nassraum 23 und dem Drucksensor 18 durch die Trennwand 22 hindurch dicht ausgebildet sein. Dazu dient die Anordnung eines Dichtkissens 19 aus weichem elastischen Material dergestalt, dass das Dichtkissen 19 zum einen den Innenraum des Gehäuses 21 gegen den Drucksensor 18 abdichtet und andererseits auch den Trockenraum 24 gegen den Nassraum 23. Das Dichtkissen 19 formt dabei einen Druckkanal 20 zwischen Nassraum 23 und Drucksensor 18. Bei der Montage des Gehäuses 21 wird zumindest ein unterer Abschnitt des Dichtkissens gegen den Schaltungsträger verpresst, so dass ein Formschluss zwischen Schaltungsträger 13 und Dichtkissen 19 zustande kommt. Dabei kann das Dichtkissen 19 aber auch zweiteilig ausgebildet sein: So kann ein erstes Dichtkissen letztgenannte Funktion zur Abdichtung des Gehäuseinneren gegen den Drucksensor verwendet und im Gehäuse verspannt werden, wohingegen ein zweites Dichtkissen zum Abdichten von Nass- und Trockenraum bezüglich der Trennwand dient.

Insbesondere für die Anbindung der vorbeschriebenen Sensoreinheit zum Erkennen eines Aufpralls an ein zentral im Fahrzeug angeordnetes Airbagsteuergerät ist mindestens ein Stecker am erfindungsgemäßen Gerät vorgesehen. Vorzugsweise wird dabei ein Kunststoffstecker 25 mit eingespritzten Steckerpins 27 verwendet.

Der Stecker 25 kann auf unterschiedliche Art auf den Schaltungsträger 13 und am Gehäuse 21 angebracht werden:
a) Der Stecker 25 wird auf den Schaltungsträger 13 aufgebracht und mit diesem verschraubt. Anschließend werden die durch den Schaltungsträger 13 hindurch ragenden Steckerpins 27 durch Löten oder Schweißen oder durch Einpressen mit dem Schaltungsträger 13 kontaktiert. Bei der Montage des Schaltungsträgers 13 mit darauf angebrachtem Stecker 25 im Gehäuse 21 kann der Steckerumfang mit geeigneten Mitteln zur zusätzlichen mechanischen Fixierung am Gehäuse 21 verrasten.
b) Der Stecker 25 ist Bestandteil des als Kunststoffspritzteil ausgebildeten Gehäuses 21. Der Schaltungsträger 13 wird auf die aus dem Stecker 25 herausragenden Steckerpins 27 aufgepresst.

Insbesondere sind auf dem Schaltungsträger 13 weitere Schaltungsbestandteile zum Steuern eines verstellbaren Fahrzeugaußenspiegels zum Beheizen eines solchen Außenspiegels, zum Steuern einer Innenraumbeleuchtung des Fahrzeugs, zum Steuern eines Fensterheberantriebs oder zum Steuern einer Zentralverriegelung eines Türschlosses angeordnet. Diese Schaltungsbestandteile können herkömmlich oder aber auch integriert oder in Form von auf einem Microcontroller ablaufender Software realisiert sein. Für derartige Funktionen sind ggf. weitere Stecker am Gerät zur Anbindung von Sensoren oder Aktoren anzubringen, welche wiederum vorzugsweise im Bereich der Fahrzeugtür angeordnet sind. Zur Anbindung des erfindungsgemäßen Geräts an die übrige, außerhalb der Fahrzeugtüre angeordnete Elektronik können auch Bussysteme wie z. B. der CAN-Bus zum Einsatz kommen.

Das Gehäuse 21 des Gerätes weist vorzugsweise zwei Bestandteile auf: Eine als Kunststoffspritzteil ausgebildete Gehäuseschale dient als Grundkörper, in dem die Montage der einzelnen Geräte-Komponenten vorgenommen wird. Ein metallischer Deckel verschließt die Gehäuseschale und dient zur Abschirmung des Gerätes gegen EMV-Einstrahlung. Die Gehäusebestandteile sind nicht im einzelnen in der Figur eingezeichnet. Das Gerät kann direkt an der Trennwand 22 anliegen und dieser in der Gehäuseform angepasst sein. Dabei ist die Kunststoffspritzteilgehäuseschale der Trennwand zugewandt. Der Gehäusedeckel kann als einfaches Druckguss- oder Stanzbiegeteil aus Aluminium ausgebildet sein.

In einer besonders vorteilhaften Weiterbildung der Erfindung kann das Gehäuse nur eine, nach einer Seite offene Schale enthalten. An deren Boden wird dann die Leiterplatte befestigt. Die Antriebsbestandteile werden eingebracht. Mit der offenen Seite zur Trennwand gerichtet wird dieses Gerät dann an der Trennwand befestigt, so dass die Trennwand als die das Gehäuse schließende Wand dient. Damit wird in besonders vorteilhafter Weise Material eingespart. Das Dichtkissen ist dann vorzugsweise einteilig ausgebildet und ist direkt zwischen Schaltungsträger und Trennwand verspannt. In Figur 1 ist dabei die der Trennwand 22 zugewandte Gehäuseseite wegzudenken. Die Gehäuseseitenwände sind bis zur Trennwand verlängert.

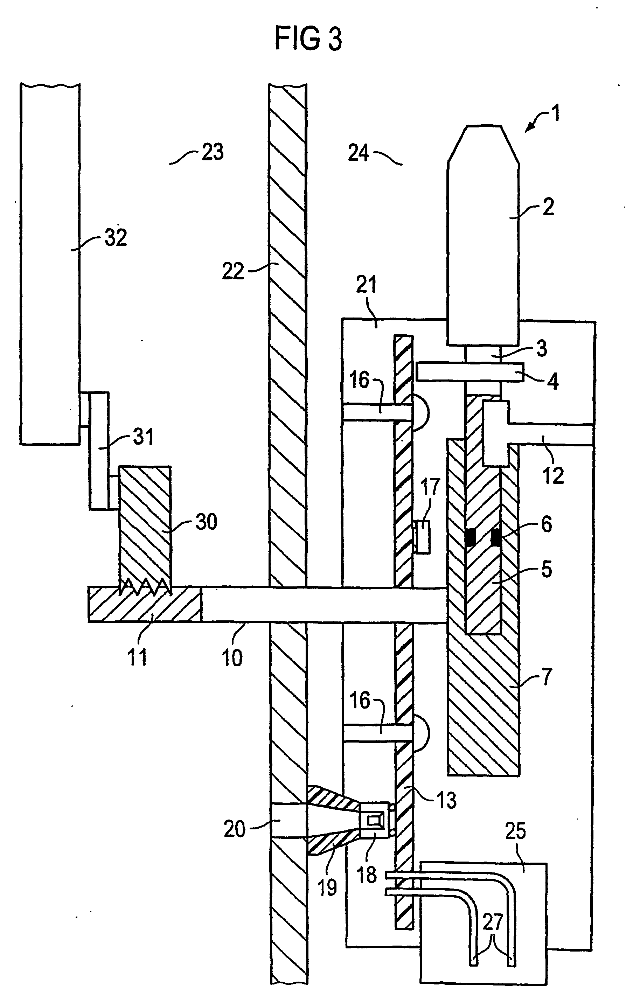

Figur 3 unterscheidet sich von Figur 1 grundsätzlich darin, dass der Schaltungsträger 13 zwischen der an der Trennwand 22 anliegenden Gehäusewand und dem Schneckenrad 7 angeordnet ist. Bei dem Vorsehen des Drucksensors 18 einerseits und des GMR-Sensors 17 andererseits ist eine beidseitige Bestückung des Schaltungsträgers 13 erforderlich. Die Lagerung der Welle 4 des Elektromotors 1 sowie die Befestigungsmittel für den Schaltungsträger 13 sind in ihrer räumlichen Lage entsprechend verändert.

Die Getrieberadwelle 10 durchragt den Schaltungsträger 13, der zu diesem Zweck eine Bohrung aufweist. Die Getrieberadwelle 10 kann aber auch neben dem Schaltungsträger 13 geführt sein.

Das Dichtkissen 19 ist in seiner Längsausdehnung wesentlich kürzer ausgebildet als bei dem Ausführungsbeispiel nach der Figur 1. Der dadurch erheblich verkürzte Druckkanal 20 fördert dabei eine erhöhte Präzision bei der Montage und dabei geringere Toleranzen hinsichtlich der Passgenauigkeit.

Anstelle des Kunststoffspritzteils liegt nun der metallische Deckel an der Trennwand 22 an, bzw. schließt die Trennwand das Gehäuse ab.

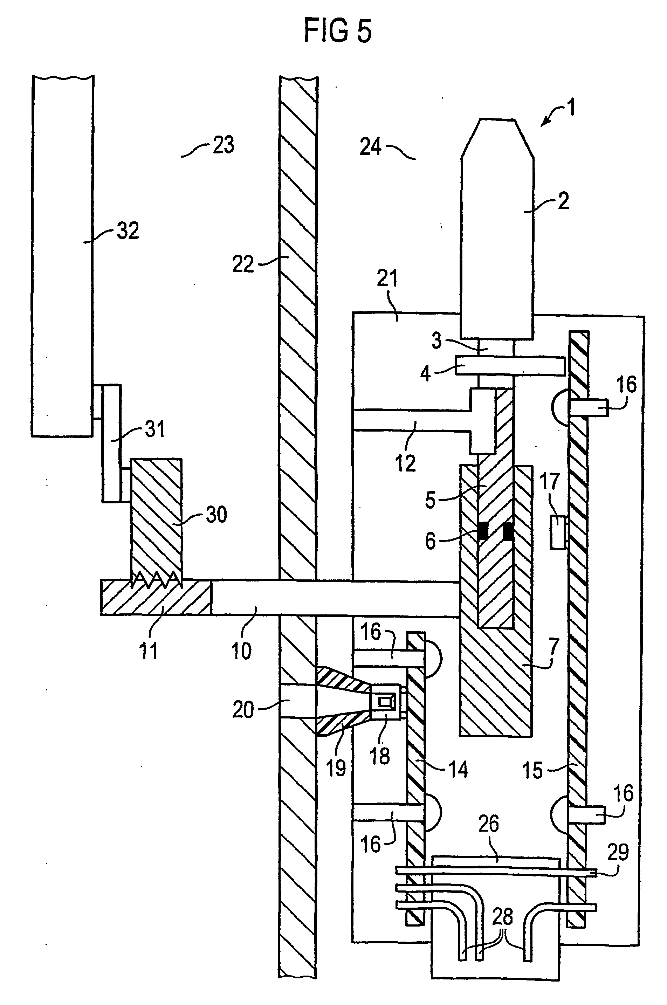

Das Ausführungsbeispiel nach Figur 5 unterscheidet sich von den vorhergehend beschriebenen Ausführungsbeispielen darin, dass zwei Schaltungsträger 14 und 15 vorgesehen sind. Hiermit können die Funktionen der Komfortelektronik von den Funktionen der Sicherheitselektronik getrennt werden. Beispielsweise sind die Funktionen zur Ansteuerung des Fensterheberantriebes sowie weitere Komfortfunktionen schaltungstechnisch auf dem Schaltungsträger 15 angeordnet, wohingegen der Drucksensor 18 wie auch die nachgeschaltete Auswerteelektronik auf dem weiteren Schaltungsträger 14 angeordnet sind. Eine Verteilung von Funktionen auf unterschiedliche Schaltungsträger kann insbesondere dann erforderlich sein, wenn die einzelnen Funktionen mit unterschiedlicher Taktung betrieben werden sollen.

Ferner ist das Gerät in seinen Abmessungen nochmals verringert, wobei insbesondere die Längsausdehnung des Gerätes nochmals verkürzt wird.

Das Gerät nach Figur 5 kann anstelle der zwei Gehäusebestandteile auch drei Gehäusebestandteile aufweisen: Einen Kunststoffrahmen, der zu beiden offenen Seiten mit je einem Deckel verschlossen wird. Dabei ist jede Leiterplatte an dem zugehörigen Deckel befestigt.

Beispielhaft dient der Stecker 26 zur Anbindung des Gerätes an ein Bordnetz. Dabei sind Steckerpins 28 in die jeweiligen Schaltungsträger 15 bzw. 14 eingepresst. Bei Bedarf sind elektrische Verbindungen in Form von eingespritzten Drähten oder Pins zwischen den Schaltungsträgern 14 und 15 vorgesehen.

Zu einer Verringerung der Bauhöhe kann eine Anordnung des weiteren Schaltungsträgers unmittelbar neben dem Schneckenrad führen. Diese Reduzierung der Bauhöhe wird im Regelfall dann jedoch durch eine erhöhte längsseitige Ausdehnung des Gerätes erkauft.

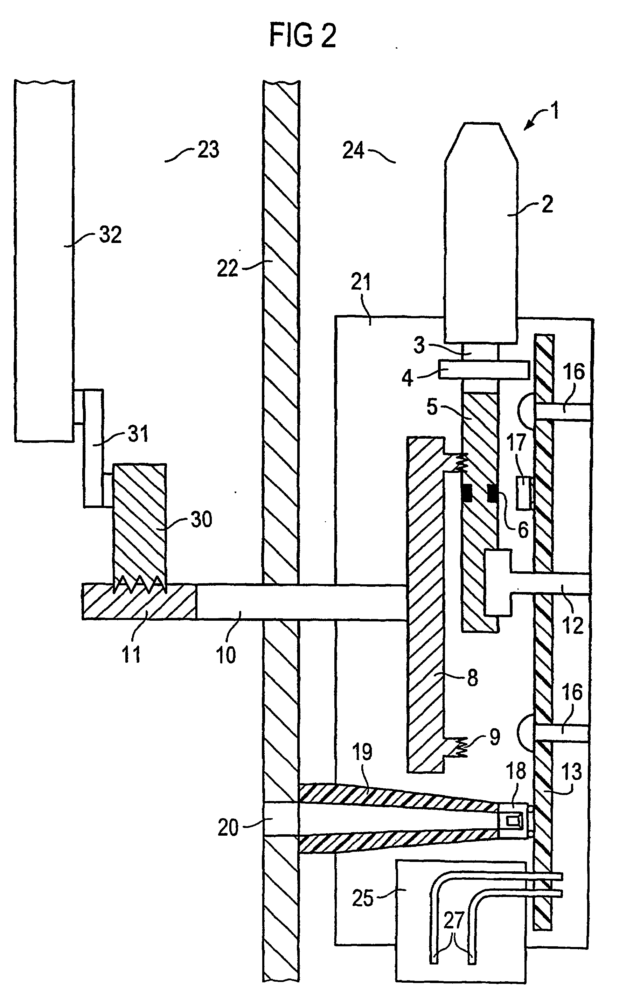

Die Ausführungsbeispiele nach den Figuren 2, 4 und 6 unterscheiden sich von den Ausführungsbeispielen nach den Figuren 1, 3 und 5 darin, dass anstelle eines Schneckengetriebes ein Evolventengetriebe verwendet wird. Dabei greift das Gewinde 5 der Welle 4 des Elektromotors 1 in die Verzahnung der Evolvente ein und treibt ein Evolventenrad 8 an. Das Evolventenrad 8 ist wiederum fest mit der Getrieberadwelle verbunden. Als bevorzugtere Ausführungsform wird jedoch aufgrund des geringeren Bauraumes die Verwendung eines Schneckengetriebes nach den Figuren 1, 3 und 5 angesehen.

Jede der vorbeschriebenen Ausführungsformen kann mit Hilfe des folgenden Verfahrens auf einfache Art und Weise montiert werden:

Zunächst werden das Schnecken- bzw. Evolventenrad 7, 8 mit der Getrieberadwelle in das Kunststoffspritzteil des Gehäuses 21, sowie das Druckkissen 19 in den Deckel des Gehäuses 21 eingelegt. Im folgenden wird das Lager 12 für die Welle 3 des Elektromotors 1 im Gehäuse 21 eingerichtet. Der bzw. die fertig bestückte/n Schaltungsträger 13 wird/werden an dem entsprechenden Gehäuseteil befestigt. Bei einem Verschrauben des Schaltungsträgers mit dem Kunststoffspritzteil wird das Dichtkissen im Gehäuseinneren in einen Presssitz gebracht.

Das Anbringen des Steckers im Gehäuse bzw. die Verbindung des Steckers mit der Leiterplatte richtet sich nach einer der vorbeschriebenen Ausführungsvarianten.

Abschließend wird der metallische Gehäusedeckel auf das Kunststoffspritzteil aufgedrückt und verschraubt oder verrastet. Bei mehrteiligen Gehäusen werden die Bestandteile entsprechend aneinander befestigt.

## Patentansprüche

1. Gerät zum Anbringen an eine Fahrzeugtüre, enthaltend in einem Gehäuse (21):
- Bestandteile eines Antriebs (1 bis 12) zum Heben oder Senken einer Fahrzeugfensterscheibe (32), **gekennzeichnet durch**
- Bestandteile einer Sensoreinheit zum Erkennen eines Aufpralls, wobei die Sensoreinheit ein Drucksensor (18) zum Aufnehmen von Druckänderungen in der Fahrzeugtüre ist,
- Mittel zum Verarbeiten von Signalen des Drucksensors (18),
- eine Öffnung zum Anbinden des Drucksensors (18) an ein Messvolumen,
- ein **durch** die Öffnung geführtes Dichtkissen (19), das den Gehäuseinnenraum gegen die Gehäuseumgebung abdichtet,
- Bestandteile (1 bis 4, 12) eines Elektromotors (1) des Fensterheberantriebs (1 bis 12),
- Bestandteile (5 bis 10) eines dem Elektromotor (1) nachgeschalteten Getriebes, dessen Getrieberadwelle (10) dicht **durch** eine Wand des Gehäuses (21) geführt ist, wobei
- das Dichtkissen (19) und die Getrieberadwelle (10) **durch** dieselbe Öffnung in derselben Gehäusewand geführt sind.

2. Gerät nach Anspruch 1, weiterhin enthaltend in dem Gehäuse (21) :
- Schaltungsbestandteile zum Steuern eines verstellbaren Fahrzeugaußenspiegels.

3. Gerät nach Anspruch 1 oder Anspruch 2, weiterhin enthaltend in dem Gehäuse (21):
- Schaltungsbestandteile zum Steuern einer Beheizung eines Fahrzeugaußenspiegels.

4. Gerät nach einem der vorhergehenden Ansprüche, weiterhin enthaltend in dem Gehäuse (21):
- Schaltungsbestandteile zum Steuern einer Innenraumbeleuchtung des Fahrzeugs.

5. Gerät nach einem der vorhergehenden Ansprüche, weiterhin enthaltend in dem Gehäuse (21):
- Schaltungsbestandteile zum Steuern eines Fensterheberantriebs (1 bis 12).

6. Gerät nach einem der vorhergehenden Ansprüche, weiterhin enthaltend in dem Gehäuse (21) :
- Schaltungsbestandteile zum Steuern einer Verriegelung eines Türschlosses.

7. Gerät nach einem der vorhergehenden Ansprüche, bei dem die Bestandteile des Fensterheberantriebs (1 bis 12) und ein Schaltungsträger (13, 15) für Schaltungsbestandteile im Gehäuse (21) übereinander angeordnet sind, wobei der Schaltungsträger (13, 15) zwischen den Antriebsbestandteilen (1 bis 12) und derjenigen Gehäusewand, die der Gehäusewand mit der Öffnung für die Getrieberadwelle (10) gegenüber liegt, angeordnet ist.

8. Gerät nach einem der vorhergehenden Ansprüche, bei dem die Bestandteile des Fensterheberantriebs, (1 bis 12) und ein Schaltungsträger (13) für.Schaltungsbestandteile im Gehäuse (21) übereinander angeordnet sind, wobei der Schaltungsträger (13) zwischen den Antriebsbestandteilen (1 bis 12) und der Gehäusewand mit der Öffnung für die Getrieberadwelle (10) angeordnet ist.

9. Gerät nach Anspruch 7 oder Anspruch 8, bei dem ein weiterer Schaltungsträger (14) für Schaltungsbestandteile vorgesehen ist, bei dem die Schaltungsträger (14, 15) parallel zueinander angeordnet sind, und bei dem die Bestandteile des Fensterheberantriebs (1 bis 12) zumindest teilweise zwischen dem Schaltungsträger (15) und dem weiteren Schaltungsträger (14) angeordnet sind.

10. Gerät nach einem der Ansprüche 7 bis 9, bei dem ein Sensor (17) zum Aufnehmen der Drehzahl des Elektromotors (1) oder eines Getrieberades (7, 8) oder einer Getriebewelle (10) auf dem Schaltungsträger (13, 15) in geeigneter Position angeordnet ist.

11. Gerät nach einem der vorhergehenden Ansprüche, bei dem als Gehäusewand zumindest ein Teil der Trennwand (22) dient, die einen als Trockenraum bezeichneten ersten Teilbereich in der Fahrzeugtür vor einem Eindringen von Feuchtigkeit mehr schützt als einen als Feuchtraum bezeichneten zweiten Teilbereich in der Fahrzeugtür.

## Claims

1. Device for fitting to a vehicle door, containing in one housing (21):
- Components of a drive (1 to 12) for raising or lowering a vehicle window glass (32), **characterized by**
- Components of a sensor unit for detecting a crash, where the sensor unit is a pressure sensor (18) for recording changes in pressure in the vehicle door,
- Means for processing signals of the pressure sensor (18),
- An opening to link the pressure sensor (18) to a measurement volume,
- A sealing pad (19) fed through the opening which seals the interior of the housing against the housing environment,
- Components (1 to 4, 12) of an electric motor (1) of the window winder drive (1 to 12)
- Components (5 to 10) of a drive connected after the electric motor (1), for which the drive wheel shaft (10) is fed via a tight seal through a wall of the housing (21), where
- the sealing pad (19) and the drive wheel shaft (10) are fed through the same opening in the same housing wall.

2. Device in accordance with Claim 1, further containing in the housing (21):
- Circuit components for controlling an adjustable vehicle exterior mirror.

3. Device in accordance with Claim 1 or Claim 2, further containing in the housing (21):
- Circuit components for controlling heating of a vehicle exterior mirror.

4. Device in accordance with one of the previous claims, further containing in the housing (21):
- Circuit components for control of the vehicle's interior lighting.

5. Device in accordance with one of the previous claims, further containing in the housing (21):
- Circuit components for controlling a window winder drive (1 to 12).

6. Device in accordance with one of the previous claims, further containing in the housing (21):
- Circuit components for controlling the locking of a door lock .

7. Device in accordance with one of the previous claims, in which the components of the window winder drive (1 to 12) and circuit carrier (13, 15) for circuit components are arranged above each other in the housing (21), where the circuit carrier (13, 15) is arranged between the drive components (1 to 12) and that housing wall which is opposite the housing wall with the opening for the drive wheel shaft (10).

8. Device in accordance with one of the previous claims, in which the components of the window winder drive, (1 to 12) and a circuit carrier (13) for circuit components are arranged above one another in the housing (21), where the circuit carrier (13) is arranged between the drive components (1 to 12) and housing wall with the opening for the drive wheel shaft (10).

9. Device in accordance with Claim 7 or Claim 8, in which a further circuit carrier (14) is provided for circuit components, in which the circuit carriers (14, 15) are arranged in parallel to one another, and in which the components of the window winder drive (1 to 12) are arranged at least partly between the circuit carrier (15) and the further circuit carrier (14).

10. Device in accordance with one of the Claims 7 to 9, in which a sensor (17) to record the speed of the electric motor (1) or of a drive wheel (7, 8) or of a drive shaft (10) is arranged on the circuit carrier (13, 15) in a suitable position.

11. Device in accordance with one of the previous claims, in which at least a part of the dividing wall (22) serves as a housing wall which gives greater protection against moisture penetration to a first subsection of the vehicle door designated as a dry area than it does to a second subsection of the vehicle door designated as a wet area.

## Revendications

1. Appareil à monter sur une porte de véhicule, contenant dans un boîtier (21) :
- des composants d'une commande (1 à 12) pour le soulèvement ou l'abaissement d'une vitre de véhicule (32), **caractérisé par**
- des composants d'un capteur pour la détection d'un choc, le capteur étant un capteur de pression (18) pour l'enregistrement de variations de pression dans la porte du véhicule,
- des moyens pour le traitement de signaux du capteur de pression (18),
- une ouverture pour le rattachement du capteur de pression (18) à un volume de mesure,
- un coussin d'étanchéité (19) guidé à travers l'ouverture, qui rend étanche l'intérieur du boîtier par rapport à l'environnement du boîtier,
- des composants (1 à 4, 12) d'un moteur électrique (1) de la commande de lève-vitre (1 à 12),
- des composants (5 à 10) d'une transmission placée en aval du moteur électrique (1), dont l'arbre de roue (10) est guidé de façon étanche à travers une paroi du boîtier (21), de façon que
- le coussin d'étanchéité (19) et l'arbre de roue d'engrenage (10) soient guidés à travers la même ouverture dans la même paroi de boîtier.

2. Appareil selon la revendication 1, contenant également dans le boîtier (21) :
- des composants de circuit pour la commande d'un rétroviseur extérieur réglable de véhicule.

3. Appareil selon la revendication 1 ou la revendication 2, contenant également dans le boîtier (21) :
- des composants de circuit pour la commande d'un chauffage d'un rétroviseur extérieur de véhicule.

4. Appareil selon l'une des revendications précédentes, contenant également dans le boîtier (21) :
- des composants de circuit pour la commande d'un éclairage intérieur du véhicule.

5. Appareil selon l'une des revendications précédentes, contenant également dans le boîtier (21) :
- des composants de circuit pour le contrôle d'une commande de lève-vitre (1 à 6).

6. Appareil selon l'une des revendications précédentes, contenant également dans le boîtier (21) :
- des composants de circuit pour la commande d'un verrouillage d'une serrure de porte.

7. Appareil selon l'une des revendications précédentes, sur lequel les composants de la commande de lève-vitre (1 à 12) et un support de circuit (13, 15) pour des composants de circuit sont disposés les uns au-dessus des autres dans le boîtier (21), le support de circuit (13, 15) étant disposé entre les composants de commande (1 à 12) et la partie du boîtier qui fait face à la paroi de boîtier avec l'ouverture pour la roue d'arbre d'engrenage (10).

8. Appareil selon l'une des revendications précédentes, sur lequel les composants de la commande de lève-vitre (1 à 12) et un support de circuit (13) pour des composants de circuit sont disposés les uns au-dessus des autres dans le boîtier (21), le support de circuit (13) étant disposé entre les composants d'entraînement (1 à 12) et la paroi de boîtier avec l'ouverture pour l'arbre de roue d'engrenage (10).

9. Appareil selon la revendication 7 ou la revendication 8, sur lequel un autre support de circuit (14) est prévu pour des composants de circuit, sur lequel les supports de circuit (14, 15) sont disposés de façon parallèle entre eux et sur lequel les composants de la commande de lève-vitre (1 à 12) sont disposés au moins partiellement entre le support de circuit (15) et l'autre support de circuit (14).

10. Appareil selon l'une des revendications 7 à 9, sur lequel un capteur (17) pour l'enregistrement du régime du moteur électrique (1) ou d'une roue d'engrenage (7, 8) ou d'un arbre d'engrenage (10) est disposé sur le support de circuit (13, 15) dans une position appropriée.

11. Appareil selon l'une des revendications précédentes, sur lequel au moins une partie de la paroi de séparation (22) sert de paroi de boîtier, laquelle protège une première zone partielle appelée espace sec dans la porte du véhicule contre une pénétration d'humidité davantage qu'une seconde zone partielle appelée espace humide dans la porte du véhicule.
